# EUROPÄISCHE PATENTSCHRIFT

(11) **EP 0 917 269 B1**
(45) Veröffentlichungstag und Bekanntmachung des Hinweises auf die Patenterteilung: **17.01.2001**
(21) Anmeldenummer: 98121763.1
(22) Anmeldetag: 16.11.1998
(51) Int. Cl.: H02G 15/18

(54) **Stützkörper für einen hohlen Körper**
Supporting body for a hollow body
Support pour un corps creux

(30) Priorität: 15.11.1997 DE 19750665
(43) Veröffentlichungstag der Anmeldung: 19.05.1999
(73) Patentinhaber: NKT Cables GmbH, 51063 Köln (DE)
(72) Erfinder: Hinz, Jürgen, D 26954 Nordenham (DE); Meyer, Stephan, D 26919 Brake (DE); Osterwohldt, Karl Heinz, D 26954 Nordenham (DE)

(56) Entgegenhaltungen:
- EP-A- 0 619 636
- EP-A- 0 631 357
- FR-A- 2 761 830
- GB-A- 2 099 638
- US-A- 3 946 480
- US-A- 5 577 310

## Beschreibung

Die Erfindung betrifft einen Stützkörper für einen elastisch aufweitbaren, hohlen Muffenkörper gemäß dem Oberbegriff des Anspruchs 1, vorzugsweise zur Anwendung für abgeschirmte Mittelspannungskabel.

Neben den Techniken zur Überdeckung von Kabelspleißen mit Warmschrumpftechnik oder Aufschiebetechnik wird die Kaltschrumpftechnik angewendet. Muffenkörper der Kaltschrumpftechnik sind in der Regel so gestaltet, daß ein aufgeweiteter Muffenkörper aus elastischem Material von einem hohlen Stützkörper gedehnt gehalten wird.

Es ist bekannt, einen elastischen Muffenkörper auf einem rohrförmigen Stütz- oder Tragkörper zu positionieren und zwischen Muffen- und Stützkörper eine Haut aus Material mit geringem Reibungskoeffizienten anzuordnen. An der Haut sind sogenannte Treibriemen befestigt, mit denen die Haut auf dem Stützkörper gehalten wird. Es wird damit auch ermöglicht, die Haut zu führen und anzutreiben (EP 0 631 357 B1).

Es ist auch schon vorgeschlagen worden, unter dem Muffenkörper auf mindestens einem rohrförmigen Stützkörper eine sogenannte Zwischenwulst einzulagern (EP 0 619 636 B1). Die Zwischenwulst besteht aus einem schraubenwendelförmig gewickeltem Materialstreifen, der im Innern der Anordnung in das Innere des Stützkörpers und im Innern heraus bis zum offenen Ende des Stützkörpers geführt wird, wo der Materialstreifen manuell faßbar ist. Durch Ziehen an dem herausgeführten Ende läßt sich der Materialstreifen vom Stützkörper abwickeln, wobei das Trägerrohr eine Zugkomponente in Richtung 'unter dem Muffenkörper heraus' erhält. Der Nachteil dieser Anordnung ist, daß die Zwischenwulst aus aufwendig gestaltetem Material besteht, welches nach der Montage wertlos ist und als Müll entsorgt werden muß. Ein weiterer Nachteil besteht darin, daß die schraubenförmigen Wendel Riefen oder Eindruckmarken im Innern des Muffenkörpers hinterlassen, was mit dem Nachteil behaftet ist, daß die Berührung der Steuerelemente mit der Abschirmung und/oder dem Kabelverbinder nicht vollständig ist, so die gewünschte elektrische Funktion nicht immer erreichbar ist.

In der zuvor beschriebenen Anordnung wird auch vorgeschlagen, zwei rohrförmige Stützkörper einzusetzen. Ausgehend von dieser Anordnung mit zwei Stützkörpern wird in der US 5.577.310 A eine Verbesserung dargestellt, die darin besteht, daß mindestens ein rohrförmiger Stützkörper vor der Montage auf der Unterlage (nämlich dem Kabel) fixiert wird. Mit dieser Verbesserung soll nach Aussage der US-Schrift, ein starker Nachteil behoben werden. Es hat sich gezeigt, daß bei einer Anordnung mit zwei Stützkörpern beide Stützkörper während der Montage in Bewegung geraten können, da sie auf der Haut mit geringem Reibungskoeffizienten leicht gleiten. Es ist eine präzise Plazierung des Muffenkörpers über der Kabelverbindung nicht mehr möglich. Es gibt also das Problem, daß die elastische Aufweitung des Muffenkörpers Rückstellkräfte erzeugt, die die unerwünschte Bewegung des Muffenkörpers auf den Stützkörpern zur Folge haben. Eine Gleitbewegung kann auch bei einem auf Stützkörpern angeordneten und zur Lagerung oder zum Versand verpackten Muffenkörper vorkommen. Dann nützt die Anordnung nichts mehr, da zum Zeitpunkt der Montage der Muffenkörper auf den Stützkörpern ganz oder teilweise verruscht ist.

Eine andere zweiteilige Stützvorrichtung zur aufgeweiteten Halterung einer elastischen Hülle wird in der Schrift US 3,946,480 A dargestellt. Die beiden Teile der Vorrichtung sind relativ komplex aufgebaut. Sie umfassen je zwei oder drei Ringkörper, die untereinander mit Stegen verbunden sind. Zu Beginn der Montage befinden sich die Ringkörper im größtmöglichen Abstand unter der Hülle. Zur Entfernung der Stützvorrichtung an der Stelle eines Kabelspleißes können die im Innern der Hülle liegenden Ringkörper mit Zugmitteln zum äußeren Ringkörper bewegt werden, wobei die Ringkörper an den Stegen geführt werden und an ihnen entlanggleiten. Mit dem Herausbewegen der Ringkörper aus dem Inneren fehlt der Hülle die Stütze; sie fällt in sich zusammen. Die Nachteile dieser Vorrichtung sind, daß sie sehr kompliziert aufgebaut ist und daß zwischen den beiden Teilen der Stützvorrichtung keine Verbindung vorhanden ist, die ein vorzeitiges Auseinanderbewegen verhindert.

Es ist die Aufgabe der Erfindung, einen Stützkörper anzugeben, der montagefreundlich ist und der von den Rückstellkräften des Muffenkörpers nicht vorzeitig herausbewegt werden kann.

Die Lösung der Aufgabe, die durch die kennzeichnenden Merkmale des Anspruchs 1 definiert ist, ist im wesentlichen, daß der Stützkörper an einer definierten Trennstelle in mindestens zwei Teile trennbar ist, daß mindestens einem Stützteilkörper eine Abziehhilfe zugeordnet ist und daß diese zwischen dem Stützkörper und dem hohlen Körper (erster Teilbereich) und auf der Innenseite des Stützkörpers (zweiter Teilbereich) verläuft und daß die innen und außen verlaufenden Teile der Abziehhilfe im Bereich der Trennstelle miteinander verbunden sind. Die nach außen herausragenden freien Enden der beiden Teile der Abziehhilfe sind dann vom Monteur einfach zusammen faßbar und handhabbar.

Vorzugsweise sollen Muffenkörper für den Mittelspannungsbereich betrachtet werden. Solche Muffenkörper - in der Regel auch mit eingelegten Steuerelementen - werden vorzugsweise aus Silikonkautschuk hergestellt. Silikonkautschuk hat die Eigenschaft, daß es auf fast allen Stoffen nur sehr schwer gleitet. Eine Abziehhilfe ist daher eine vorzügliche Maßnahme, um die Gleitbewegung zu erleichtern und zu unterstützen.

Der erfindungsgemäße Gegenstand kann bei fast allen gängigen Muffenkörpern eingesetzt werden. Wie bekannt, hat der Stützkörper einen Innendurchmesser, der größer ist als der Kabelaußendurchmesser. Der Muffenkörper hat die Länge des zu bedeckenden Kabelspleißes. Der Stützkörper sollte in der Regel länger ausgebildet sein als der Muffenkörper, damit er an seinen Enden manuell oder mit Werkzeugen gehalten werden kann.

Die Trennbarkeit zweier Stützteilkörper soll etwa in der Mitte unter dem hohlen Körper möglich sein; so daß sich die beiden nach der Trennung entstehenden Stützteilkörper in einfacher Weise in axialer Richtung voneinander entfernen können. Das innere Ende der Stützteilkörper, sollte abgeschrägt oder gerundet, zumindest nicht scharfkantig sein, um das Abgleiten zu erleichtern.

Es kann vorgesehen sein, daß der Stützkörper als ganzes als Zylinder ausgebildet ist. Man kann jedoch auch eine Gestaltung ausbilden, bei der mindestens ein Stützteilkörper konisch ausgebildet ist. Wobei es dann von Vorteil ist, wenn dieser Stützteilkörper in Richtung auf die lösbare Verbindung hin konisch verjüngt zuläuft. Diese Form verbessert die durch die elastischen Rückstellkräfte hervorgerufen oder unterstützte Gleitbewegung zwischen Stützteilkörper und Muffenkörper.

Die lösbare Verbindung kann kraftschlüssig oder formschlüssig ausgebildet sein. Die Trennstelle des Stützkörpers kann vorzugsweise in einer Ebene senkrecht zur Achse des Stützkörpers liegen. Weitere oder andere Ausbildungen der Trennstelle sind auch möglich. So kann ein Teil oder ein ganzer Stützteilkörper auch in Längsrichtung, d.h. parallel zu seiner Achse teilbar oder zerlegbar sein. Letzeres erleichtert auch die Entfernung des Stützkörpers nach der Montage.

Die Trennstelle kann von vornherein als lösbare Verbindung von zwei Stützteilkörpern ausgebildet sein, beispielsweise durch eine Verrastung, Gewinde-, Schnapp- oder als Hakenverbindung.

Der Stützkörper kann in einer anderen Ausführungsform eine Trennstelle in Form einer Sollbruchstelle oder materiellen Schwächungslinie haben. Die Sollbruchstelle könnte dann als Perforation oder Filmverbindung ausgebildet sein. Die Längen der nach der Teilung entstehenden Stützteilkörper können gleich oder unterschiedlich lang sein.

Auf der dem Stützteilkörper zugewandten Fläche der Abziehhilfe und/oder auf der dem Muffenkörper zugewandten Fläche der Abziehhilfe kann ein Gleitmittel oder ein Gleitbelag aufgebracht sein. Teile der Oberfläche des Stützkörpers können auch profiliert (mit Vertiefungen versehen) ausgebildet sein, wodurch das Gleiten begünstigt wird.

Zur Montage werden die zu verbindenden Kabel in bekannter Weise abgesetzt, und die Kabelenden verspleißt. Die Einheit aus Muffenkörper und Stützkörper wird an die Stelle der Kabelverbindung geführt, an der sich der Muffenkörper auflegen soll. Der Stützkörper wird durch äußere Krafteinwirkung an der Trennstelle getrennt, so daß sich durch Ziehen an der Abziehhilfe die beiden Stützteilkörper unter dem Muffenkörper heraus bewegen lassen. Auf die Stützteilkörper läßt durch die Abziehhilfe zweifach Zugkraft aufbringen, nämlich durch Zug an denselben und durch Ziehen an der Abziehhilfe. Beide Stützteilkörper rutschen unter dem Muffenkörper heraus unterstützt durch die elastische Vorspannung des Muffenkörpers. Der Muffenkörper gelangt so in die vorgesehene Position über den Kabelverbinder.

Die Abziehhilfe kann in einem Teilbereich flächig (als Folie oder als Folienschlauch) ausgebildet sein. Die Abziehhilfe kann in einem anderen Teilbereich streifen- oder fadenförmig ausgebildet sein, wobei dann Schnüre oder Bänder ausgebildet sind, die einzeln verlaufen oder auch miteinander verbunden sein können. Als Material bietet sich Polyethylen oder PTFE an.

Die Teilbereiche können ganz bis zur Verbindungsstelle laufen. Die Teilbereiche können sich auch nur vom äußeren Rand bis hin zu einem bestimmten Abstand von der Verbindungsstelle erstrecken.

Als besondere Ausführungsform kann einer der beiden Stützteilkörper eine Abziehhilfe mit einem innen und einem außen liegenden Teilbereich tragen, wobei dann an dem anderen Stützteilkörper eine Abziehhilfe mit nur einem Teilbereich ausgebildet ist. Dieser einzige Teilbereich kann entweder nur innen oder nur außen liegen. Das innere Ende dieses Teilbereichs ist innen in der Nähe der Trennstelle am Stützteilkörper fixiert.

Im Bereich der Trennstelle können Öffnungen liegen, durch die hindurch die beiden Teilbereiche einer Abziehhilfe verbunden sind. Die Öffnungen können als Aussparungen an der inneren Kante der Stützteilkörper ausgeführt sein.

Sowohl der erste, zwischen einem Stützteilkörper und dem hohlen Körper vorhandene Teilbereich als auch der zweite, im Innern eines Teilkörpers verlaufende Teilbereich einer Abziehhilfe kann faden- oder streifenförmig ausgebildet sein. Eine andere Ausführungsform besteht darin, daß einer der Teilbereiche (vorzugsweise der innen liegende) flächig (als Schlauch) und der andere Teilbereich faden- oder streifenförmig ausgebildet ist.

Ausführungsformen der Erfindung werden in den Figuren dargestellt. Sie zeigen im einzelnen:
Fig. 1 ein Muffenkörper auf einem Stützkörper aus zwei Teilkörpern,
Fig. 2 ein Detail von Abziehhilfe und Stützteilkörper,
Fig. 3 einen Druckring zur Verbesserung des Abgleitens der Abziehhilfe,
Fig. 4 eine Verbindungsstelle der Stützteilkörper als Schnappverbindung und
Fig. 5 einen Stützkörper mit materieller Schwächungslinie.

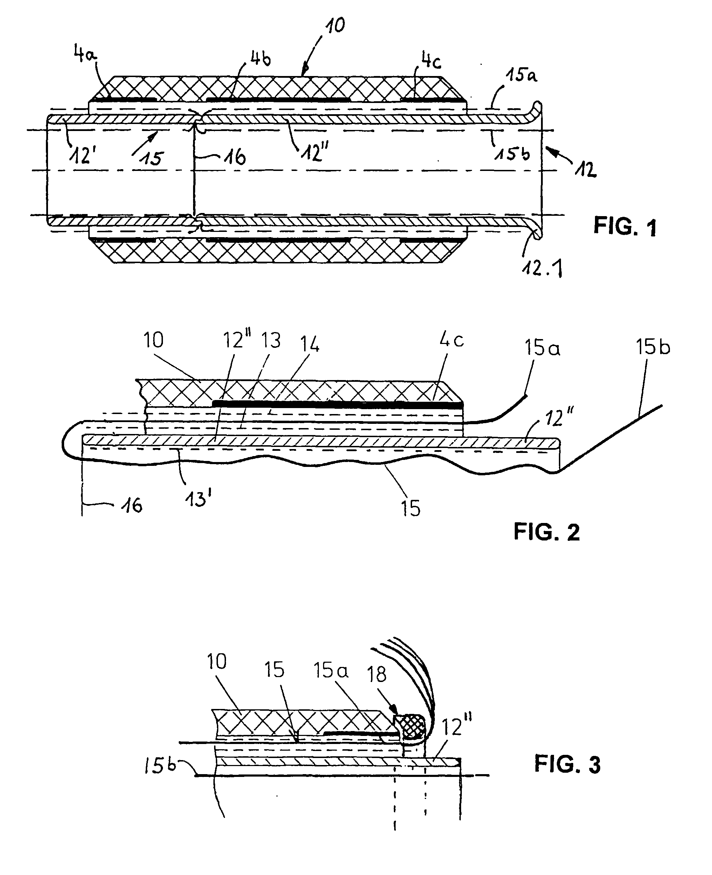

Fig. 1 zeigt in rotationssymmetrischer Darstellung einen Muffenkörper 10 auf einem an einer Verbindungsstelle 16 geteilten Stützkörper 12. Die Längen der beiden Stützteilkörper 12',12" sind asymmetrisch zur Mitte des Muffenkörpers. Der Muffenkörper 10 hat etwa die Länge eines (nicht dargestellten) zu bedeckenden Kabelspleißes und ist mit drei Steuerelementen 4a, 4b, 4c versehen.

Diese Anordnung würde bei einer Montage über einer Kabelverbindung in einer Ablegeposition in der Nähe der Kabelverbindung 'geparkt' werden, bis die Kabelverbindung hergestellt ist. Zur Ablage des Muffenkörpers auf der Verbindungsstelle (Kabelspleiß) wird der Muffenkörper mit Stützkörper aus der Parkposition in die Ablageposition gebracht, um dann dort die Stützkörperteile zu entfernen. Hierbei wird unter Kraftaufwand der Stützkörper an der Trennstelle 16 geteilt und die Stützteilkörper 12',12" gleichzeitig oder einzeln nacheinander unter gleichzeitigem Einsatz der den Stützteilkörpern zugeordneten Abziehhilfen 15 unter dem Muffenkörper weggezogen. Unterstützt von der elastischen Rückstellkraft des Muffenkörpers und dem Gleitmittel gleiten die Stützteilkörper unter dem Muffenkörper heraus. Letzterer legt sich in die vorgesehene Position über die Kabelverbindung.

Als besondere Ausgestaltung ist das äußere Ende 12.1 eines der Stützteilkörper 12" trompetenförmig nach außen aufgewölbt. Mit dieser Ausgestaltung wird das Entlanggleiten des inneren Teilbereichs 15b der Abziehhilfe an der Außenöffnung 12.1 erleichtert.

In Fig. 2 wird im Detail ein Stützteilkörper 12" mit zugeordneter Abziehhilfe 15 gezeigt. Die freien Enden der Fäden ragen aus dem Stützteilkörper heraus. Die Abziehhilfe ist auf der Außenfläche des Stützkörpers in einem ersten Teilbereich 15a entlanggeführt und läuft mit einem zweiten Teilbereich 15b innen durch den Stützteilkörper 12" zurück, wobei sie das innere Ende des Stützteilkörpers umschlingt. Der Teilbereich 15a der Abziehhilfe liegt zwischen Stützkörper 12 und Muffenkörper 10. Die freien Enden der Abziehhilfe können vom Monteur zusammen erfaßt werden. Der Stützkörper 12" ist innen (13') und außen (13) mit einem Gleitmittel versehen; die Abziehhilfe 15 ist ebenfalls auf ihrer Oberfläche mit einem Gleitmittel oder -belag 14 belegt.

In Fig. 3 ist ein Ring 18 dargestellt, dessen Innendurchmesser dem entsprechenden Maß des Muffenkörpers entspricht. Der Ring ist an seiner dem Muffenkörper zugewandten Seite identisch der Außenform des Muffenkörpers 10 profiliert, so daß eine satte Auflage an den Muffenkörper möglich ist. Der Ring 18 ist auf seiner dem Muffenkörper abgewandten Seite mit einer gerundeten Oberfläche versehen und aus geeignetem Material hergestellt, so daß seine Oberfläche gegenüber der Abziehhilfe einen möglichst kleinen Reibungskoeffizienten aufweist. Der Ring soll verhindern, daß die Abziehhilfe - hier in fadenförmiger Ausbildung dargestellt - am Rand des Muffenkörpers möglichst wenig haftet, was bei Muffenkörpern aus Silikonkautschuk leicht möglich ist. Nach der Montage kann der Ring entfernt werden.

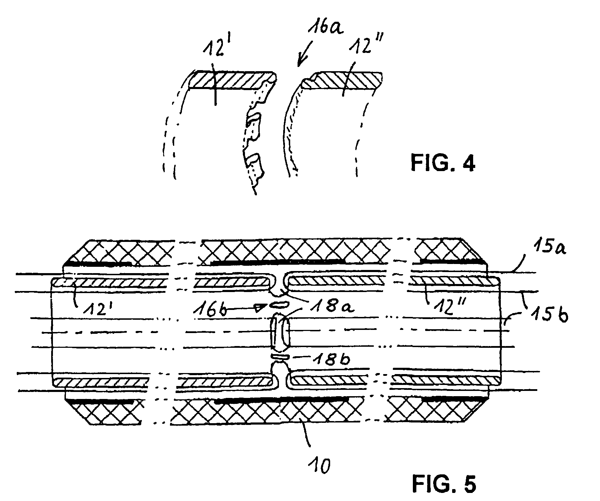

Die Fig. 4 zeigt eine Verbindungstelle 16a zwischen den Stützteilkörpern 12',12" nach Fig. 1. Die Verbindungstelle ist als Schnappverbindung ausgebildet, bei der ein Zahnkranz am inneren Ende des linken Stützteilkörpers 12' in eine Rille am inneren Ende der rechten Stützteilkörpers 12" eingreift. Eine oder beide Abziehhilfen werden beim Zusammenschnappen der Verbindung eingeklemmt. Bei der Ausbildung einer Abziehhilfe mit einem oder beiden Teilbereichen in Streifenform (15b in Fig. 5) werden die Streifen zwischen den Zahnlücken des Zahnkranzes hindurchgeführt.

Fig. 5 zeigt schematisch eine Verbindungsstelle 16b zwischen zwei Stützteilkörpern 12',12", die als Perforation (materielle Schwächungslinie) ausgebildet ist. Es handelt sich hier um größere Perforationslöcher 18a, durch die hindurch die beiden Teilbereiche 15a, 15b der Abziehhilfe miteinander verbunden sind und um kleinere Perforationslöcher 18b, die zur Schwächung der Verbindungsstelle beitragen. Im Innern der Stützteilkörper ist die Abziehhilfe jeweils streifenförmig ausgeführt.

## Patentansprüche

1. Stützkörper, der bis zur Montage zum Tragen eines elastisch aufweitbaren, hohlen Körpers (**10**), insbesondere eines Muffenkörpers einer elektrischen Kabelverbindung, geeignet ist, wobei mindestens eine flächige oder fadenförmige Abziehhilfe (**15**) für die Unterstützung der Gleitbewegung des Stützkörpers (**12**) einen auf der Außenseite des Stützkörpers (**12**) liegenden, in Längsrichtung des Stützkörpers verlaufenden Teilbereich (**15a**) und einen auf der Innenseite des Stützkörpers in Längsrichtung des Stützkörpers verlaufenden Teilbereich (**15b**) aufweist, **dadurch gekennzeichnet**, daß der Stützkörper (**12**) an einer vom hohlen Körper (**10**) überbrückbaren Trennstelle (**16, 16a, 16b**) trennbar ist und daß die Teilbereiche (**15a, 15b**) der Abziehhilfe (**15**) im Bereich der Trennstelle (**16**) miteinander verbunden sind.

2. Stützkörper nach Anspruch 1, **dadurch gekennzeichnet**, daß die Trennstelle (**16**) eine materielle Schwächungslinie (**16b**) oder eine Verbindungsstelle (**16a**) eines aus zwei Teilen (**12',12"**) bestehenden Stützkörpers (**12**) ist.

3. Stützkörper nach einem der vorhergehenden Ansprüche, **dadurch gekennzeichnet**, daß die Trennstelle (16) des Stützkörpers (12) in einer Ebene senkrecht zu dessen Achse verläuft.

4. Stützkörper nach einem der Ansprüche 2 oder 3, **dadurch gekennzeichnet**, daß die Verbindungsstelle (16) als Gewindeverbindung, Hakenverbindung oder Schnappverbindung (16a) ausgebildet ist.

5. Stützkörper nach einem der Ansprüche 2 oder 3, **dadurch gekennzeichnet**, daß die materielle Schwächungslinie (16b) als Perforation oder Filmverbindung ausgebildet ist.

6. Stützkörper nach einem der vorhergehenden Ansprüche, **dadurch gekennzeichnet**, daß einem Stützteilkörper (12') eine Abziehhilfe mit beiden Teilbereichen (15a, 15b) zugeordnet ist und dem anderen Stützteilkörper (12") eine Abziehhilfe mit nur einem Teilbereich (15a oder 15b) zugeordnet ist, wobei die Abziehhilfe des anderen Stützteilkörpers (12") in der Nähe der Trennstelle (16) dieses Stützteilkörpers (12") befestigt ist.

7. Stützkörper nach einem der vorhergehenden Ansprüche, **dadurch gekennzeichnet**, daß mindestens ein Teil der Oberfläche der Abziehhilfe (15) mit einem Gleitmittel (14) benetzt oder mit einer Gleitbeschichtung versehen ist.

8. Stützkörper nach einem der vorhergehenden Ansprüche, **dadurch gekennzeichnet**, daß im Bereich der Trennstelle (16b) Öffnungen (18a,18b) vorhanden sind, durch die hindurch die beiden Teilbereiche (15a, 15b) der Abziehhilfe (15) miteinander verbunden sind.

9. Stützkörper nach einem der vorhergehenden Ansprüche, **dadurch gekennzeichnet**, daß mindestens ein Teilbereich (15b) mindestens einer einem Stützteilkörper (12 , 12") zugeordneten Abziehhilfe (15) faden- oder streifenförmig ausgebildet ist.

10. Stützkörper nach Anspruch 9, **dadurch gekennzeichnet**, daß der auf der Außenseite des Stützkörpers (12) verlaufende Teilbereich (15a) der Abziehhilfe (15) faden- oder streifenförmig ausgebildet ist.

11. Stützkörper nach Anspruch 10, **dadurch gekennzeichnet**, daß der auf der Außenseite des Stützkörpers (12) verlaufende Teilbereich (15a) der Abziehhilfe (15) flächig ausgebildet ist.

12. Stützkörper nach Anspruch 9, 10 oder 11, **dadurch gekennzeichnet,** daß der im Innern des Stützkörpers (12) verlaufende Teilbereich (15b) der Abziehhilfe (15) faden- oder streifenförmig ausgebildet ist.

13. Stützkörper nach einem der vorhergehenden Ansprüche, **dadurch gekennzeichnet**, daß in mindestens einem Teil des Raums zwischen der Abziehhilfe (15) und dem Stützkörper (12) ein Gleitmittel (17') eingebracht ist.

14. Stützkörper nach einem der vorhergehenden Ansprüche, **dadurch gekennzeichnet** daß mindestens ein Teil des auf der Außenseite des Stützkörpers (12) verlaufenden Teilbereichs (15a) der Abziehhilfe (15) und/oder mindestens ein Teil des auf der Innenseite des Stützkörpers (12) verlaufenden Teilbereichs (15b) der Abziehhilfe (15) mit einem Gleitbelag oder einer Gleitbeschichtung versehen ist.

15. Stützkörper nach einem der vorhergehenden Ansprüche, **dadurch gekennzeichnet**, daß mindestens ein Teil des auf der Außenseite verlaufenden Teilbereichs (15a) der Abziehhilfe (15) mit Vertiefungen versehen ist.

## Claims

1. A support body suitable for assembly in order to carry a resiliently enlargeable hollow body (10), in particular a sleeve body of an electrical cable connexion, wherein at least one flat or thread-shaped withdrawal support (15) for supporting the sliding movement of the support body (12) comprises a partial area (15a), situated on the outside of the support body (12) and extending in the longitudinal direction of the support body, and a partial area (15b), extending on the inside of the support body in the longitudinal direction of the support body, **characterized in that** the support body (12) is separable at a separation point (16, 16a, 16b) which can be bridged by the hollow body (10), and the partial areas (15a, 15b) of the withdrawal support (15) are connected to each other in the region of the separation point (16).

2. A support body according to Claim 1, **characterized in that** the separation point (16) is a line of material weakness (16b) or a connexion point (16a) of a support body (12) comprising two parts (12', 12").

3. A support body according to one of the preceding Claims, **characterized in that** the separation point (16) of the support body (12) extends in a plane at a right angle to the axis of the said support body (12).

4. A support body according to one of Claims 2 [and] 3, **characterized in that** the connexion point (16) is constructed in the form of a thread connexion, a hook connexion or a snap connexion (16a).

5. A support body according to one of Claims 2 [and] 3, **characterized in that** the line of material weakness (16b) is constructed in the form of a perforation or a film connexion.

6. A support body according to one of the preceding Claims, **characterized in that** a withdrawal support with two partial areas (15a, 15b) is associated with one partial support body (12') and a withdrawal support with only one partial area (15a or 15b) is associated with the other partial support body (12"), wherein the withdrawal support of the other partial support body (12") is fastened in the vicinity of the separation point (16) of the said partial support body (12").

7. A support body according to one of the preceding Claims, **characterized in that** at least part of the surface of the withdrawal support (15) is moistened with a sliding means (14) or is provided with a sliding coating.

8. A support body according to one of the preceding Claims, **characterized in that** openings (18a, 18b), through which the two partial areas (15a, 15b) of the withdrawal support (15) are connected to each other, are provided in the region of the separating point (16b).

9. A support body according to one of the preceding Claims, **characterized in that** at least one partial area (15b) of at least one withdrawal support (15) associated with a partial support body (12', 12") is made thread-shaped or strip-shaped.

10. A support body according to Claim 9, **characterized in that** the partial area (15a) of the withdrawal support (15) extending on the outside of the support body (12) is made thread-shaped or strip-shaped.

11. A support body according to Claim 10, **characterized in that** the partial area (15a) of the withdrawal support (15) extending on the outside of the support body (12) is made flat.

12. A support body according to Claim 9, 10 or 11, **characterized in that** the partial area (15b) of the withdrawal support (15) extending on the inside of the support body (12) is made thread-shaped or strip-shaped.

13. A support body according to one of the preceding Claims, **characterized in that** a sliding means (17') is inserted in at least part of the space between the withdrawal support (15) and the support body (12).

14. A support body according to one of the preceding Claims, **characterized in that** at least part of the partial area (15a) of the withdrawal support (15) extending on the outside of the support body (12) and/or at least part of the partial area (15b) of the withdrawal support (15) extending on the inside of the support body (12) is provided with a sliding layer or a sliding coating.

15. A support body according to one of the preceding Claims, **characterized in that** at least part of the partial area (15a) of the withdrawal support (15) extending on the outside is provided with depressions.

## Revendications

1. Corps de renfort qui est approprié pour supporter, jusqu'au montage, un corps creux (10) élargissable élastiquement, en particulier un corps formant la gaine d'une liaison électrique par câble, dans lequel au moins un dispositif auxiliaire de traction (15) plat ou filiforme pour assister le mouvement sans friction du corps de renfort (12), comprend une section (15a) s'étendant longitudinalement au corps de renfort et agencée du côté extérieur du corps de renfort (12), et une section (15b) s'étendant longitudinalement au corps de renfort et agencée du côté intérieur du corps de renfort, caractérisé en ce que le corps de renfort (12) est séparable en un emplacement de séparation (16, 16a, 16b) qui peut être recouvert par le corps creux (10) et en ce que les sections (15a, 15b) du dispositif auxiliaire de traction (15) sont reliées entre elles à l'emplacement de séparation (16).

2. Corps de renfort selon la revendication 1, caractérisé en ce que l'emplacement de séparation (16) est une ligne matérielle de faible résistance mécanique (16b) ou un emplacement de connexion (16a) d'un corps de renfort (12) constitué de deux pièces (12', 12").

3. Corps de renfort selon l'une des revendications précédentes, caractérisé en ce que l'emplacement de séparation (16) du corps de renfort (12) s'étend dans un plan perpendiculaire à l'axe du corps de renfort (12).

4. Corps de renfort selon l'une des revendications 2 ou 3, caractérisé en ce que l'emplacement de connexion (16) se présente sous la forme d'une connexion par vis, d'une connexion par crochets ou d'une connexion par encliquetage (16a).

5. Corps de renfort selon l'une des revendications 2 ou 3, caractérisé en ce que la ligne matérielle de faible résistance mécanique (16b) se présente sous la forme d'une connexion à perforations ou d'une connexion par film.

6. Corps de renfort selon l'une des revendications précédentes, caractérisé en ce qu'un élément auxiliaire de traction constitué de deux sections (15a, 15b) est associé à une pièce (12') du corps de renfort, et un élément auxiliaire de traction constitué d'une seule section (15a ou 15b) est associé à l'autre pièce (12") du corps de renfort, l'élément auxiliaire de traction de l'autre pièce (12") du corps de renfort étant fixé à proximité de l'emplacement de séparation (16) de cette pièce (12") du corps de renfort.

7. Corps de renfort selon l'une des revendications précédentes, caractérisé en ce qu'au moins une partie de la surface de l'élément auxiliaire de traction (15) est mouillée avec un agent antifriction (14) ou est dotée d'un revêtement antifriction.

8. Corps de renfort selon l'une des revendications précédentes, caractérisé en ce que à l'emplacement de séparation (16b) sont ménagées des ouvertures (18a, 18b) qui permettent de relier entre elles les deux sections (15a, 15b) de l'élément auxiliaire de traction (15).

9. Corps de renfort selon l'une des revendications précédentes, caractérisé en ce que au moins une section (15b) d'au moins un élément auxiliaire de traction (15) associé à une pièce (12', 12") du corps de renfort est filiforme ou se présente sous la forme d'une bande.

10. Corps de renfort selon la revendication 9, caractérisé en ce que la section (15a) de l'élément auxiliaire de traction (15) s'étendant du côté extérieur du corps de renfort (12) est filiforme ou se présente sous la forme d'une bande.

11. Corps de renfort selon la revendication 10, caractérisé en ce que la section (15a) de l'élément auxiliaire de traction (15) s'étendant du côté extérieur du corps de renfort (12) est plate.

12. Corps de renfort selon la revendication 9, 10 ou 11, caractérisé en ce que la section (15b) de l'élément auxiliaire de traction (15) s'étendant à l'intérieur du corps de renfort (12), est filiforme ou se présente sous la forme d'une bande.

13. Corps de renfort selon l'une des revendications précédentes, caractérisé en ce qu'un agent antifriction (17') est introduit dans au moins une partie de l'espace compris entre l'élément auxiliaire de traction (15) et le corps de renfort (12).

14. Corps de renfort selon l'une des revendications précédentes, caractérisé en ce qu'au moins une partie de la section (15a) de l'élément auxiliaire de traction (15) s'étendant du côté extérieur du corps de renfort (12) et/ou au moins une partie de la section (15b) de l'élément auxiliaire de traction (15) s'étendant du côté intérieur du corps de renfort (12) est dotée d'une garniture antifriction ou d'un revêtement antifriction.

15. Corps de renfort selon l'une des revendications précédentes, caractérisé en ce que des évidements sont ménagés dans au moins une partie de la section (15a) de l'élément auxiliaire de traction (15) s'étendant du côté extérieur.
